# EUROPEAN PATENT SPECIFICATION

(11) **EP 2 421 930 B1**
(45) Date of publication and mention of the grant of the patent: **12.08.2015**
(21) Application number: 10722735.7
(22) Date of filing: 23.03.2010
(51) Int. Cl.: C09K 8/035, C09K 8/508, C09K 8/68, C09K 8/72

(54) **METHODS AND COMPOSITION RELATING TO THE CHEMICAL DEGRADATION OF DEGRADABLE POLYMERS**
VERFAHREN UND STOFFGEMISCH ZUM CHEMISCHEN ABBAU ABBAUBARER POLYMERE
PROCÉDÉS ET COMPOSITION ASSOCIÉS AVEC LA DÉGRADATION CHIMIQUE DE POLYMÈRES BIODÉGRADABLES

(30) Priority: 22.04.2009 US 386696
(43) Date of publication of application: 29.02.2012
(73) Proprietor: Halliburton Energy Services, Inc., Duncan, OK 73536 (US)
(72) Inventor: SAINI, Rajesh, K., Duncan, Oklahoma 73533 (US); TODD, Bradley, L., Duncan, Oklahoma 73533 (US)
(74) Representative: Cottrill, Emily Elizabeth Helen
(86) International application number: PCT/GB2010/000543
(87) International publication number: WO 2010/122278

(56) References cited:
- US-A1- 2004 094 300
- US-A1- 2004 152 601
- US-A1- 2006 169 448
- US-A1- 2007 298 977
- US-A1- 2008 139 417

## Description

### BACKGROUND

The present invention relates to subterranean treatments, and more particularly, to methods of degrading degradable polymers in subterranean formations.

Degradable polymers are increasingly becoming of interest in various subterranean applications based, at least in part, on their ability to degrade and leave voids, act as a temporary restriction to the flow of a fluid, or produce desirable degradation products (e.g., acids). One particular degradable polymer that has received recent attention is poly(lactic acid) because it is a material that will degrade downhole after it has performed a desired function or because its degradation products will perform a desired function (e.g., degrade an acid soluble component).

Degradable polymers may be used to leave voids behind upon degradation to improve the permeability of a given structure. For instance, a proppant pack may be created that comprises proppant particulates and degradable polymers so that, when the degradable polymer degrades, voids are formed in the proppant pack. Similarly, voids also may be created in a set cement in a subterranean environment. Moreover, degradable polymers may be used as a coating to temporarily protect a coated object or chemical from exposure to the subterranean environment. For example, a breaker or some other treatment chemical may be coated, encapsulated, or encaged in poly(lactic acid) and used in a subterranean operation such that the breaker may not be substantially exposed to the subterranean environment until the poly(lactic acid) coating substantially degrades. Still another use for degradable polymers in subterranean operations involves creating downhole tools or parts of downhole tools out of solid masses of a degradable polymer. In such operations, the degradable polymer may be designed such that it does not substantially degrade until the tool has substantially completed its desired function. Still other uses for degradable polymers in subterranean operations include their use as diverting agents, bridging agents, and fluid loss control agents.

Generally, hydrolysis of a degradable polymer may be most desirably achieved over a reasonable time period (e.g., from about one day to about one week) at bottom hole temperatures ("BHT") of above about 60°C. Unfortunately, many well bores have a BHT that may be lower than 60°C. In these lower temperature environments, a relatively longer time (*e*.*g*., weeks or even months) may be necessary for the degradable polymer to hydrolyze, which may be undesirable.

To meet the desired time period and temperature requirements for hydrolysis, a derivative of a degradable polymer may be used. Tailoring a degradable polymer *(e.g.,* by copolymerizing a degradable polymer, such as polylactide, with a hydrophilic group or a polyethylene oxide polymer may help bring water to the degradable bond and thus enhance hydrolytic degradation of the degradable polymer at lower temperature) to fit specified degradation parameters may be a time-consuming and expensive task, and such tailored degradable polymers still may require temperatures above about 60°C (depending on molecular weight, crystallinity, hydrophobicity, etc.) to achieve the desired degradation.

### SUMMARY

The present invention relates to subterranean treatments, and more particularly, to methods of degrading degradable polymers in subterranean formations.

The method of the present invention comprises providing a degradable polymer within a portion of a subterranean formation wherein the degradable polymer is present in a downhole tool and wherein the degradable polymer comprises at least one degradable polymer selected from the group consisting of: an aliphatic polyester, a poly(lactide), a poly(glycolide), a poly(ε-caprolactone), a poly(hydroxy ester ether), a poly(hydroxybutyrate), a poly(anhydride), a polycarbonate, a poly(ortho ether), a poly(amino acid), a poly(ethylene oxide), a poly(phosphazene), a polyether ester, a polyester amide, a polyamide, and a copolymer of the foregoing; introducing a base solution into the portion of the subterranean formation, wherein the base solution comprises at least one base selected from the group consisting of: ammonium hydroxide, an alcoholic alkaline solution, an alkaline amine solution, and derivatives thereof; and allowing the base solution to degrade the degradable polymer.

The present disclosure also provides a method comprising providing a degradable polymer within a portion of a subterranean formation, introducing a base solution into the portion of the subterranean formation, wherein the base solution comprises at least one base selected from the group consisting of: ammonium hydroxide, an alcoholic alkaline solution, an alkaline amine solution, and derivatives thereof, allowing the acid or base solution to degrade the degradable polymer.

The present disclosure also provides a method comprising providing a degradable polymer in the well bore, introducing a base solution into the well bore so as to contact the degradable polymer, wherein the base solution comprises at least one base selected from the group consisting of: ammonium hydroxide, an alcoholic alkaline solution, an alkaline amine solution, and derivatives thereof, and allowing the base solution to degrade the degradable polymer.

The present disclosure also provides a method comprising providing a treatment fluid comprising an aqueous fluid, a degradable polymer capable of releasing an acid, a gelling agent, and a base solution, wherein the base solution comprises at least one base selected from the group consisting of: ammonium hydroxide, an alcoholic alkaline solution, an alkaline amine solution, and derivatives thereof, introducing the treatment fluid into a well bore penetrating the subterranean formation, allowing the base solution to degrade the degradable polymer so as to release the acid from the degradable polymer, and allowing the acid released from the degradable polymer to facilitate a reduction in viscosity of the treatment fluid.

The features and advantages of the present invention will be apparent to those skilled in the art. While numerous changes may be made by those skilled in the art, such changes are within the scopeof the invention.

### DESCRIPTION OF PREFERRED EMBODIMENTS

The present invention relates to subterranean treatments, and more particularly, to methods of degrading degradable polymers in subterranean formations.

The methods of the present invention generally comprise providing a degradable polymer within a portion of a subterranean formation, introducing a base solution comprising at least one component selected from the group consisting of: ammonium hydroxide, an alcoholic alkaline solution, and an alkaline amine solution, and derivatives thereof to the portion of the subterranean formation, and allowing the base solution to degrade the degradable polymer. As used herein, the term "solution" does not connote any particular degree of dissolution or mixing of the substances present in the solution. In some embodiments, the portion of the subterranean formation where the degradable polymer is located may have a temperature of about 15.6° C (about 60° F) or less. In some exemplary embodiments, the degradation of the degradable polymer may take place within a time frame of two to three days after the introduction of the base solution.

The methods of the present invention have many potential advantages. Among these advantages, one advantage may be that base solutions comprising ammonium hydroxide, an alcoholic alkaline solution, and an alkaline amine solution, and/or derivatives thereof, may degrade a degradable polymer faster than other base solutions, *e*.*g*., sodium hydroxide. For example, the time necessary to degrade a degradable polymer at temperatures in the range of about 15.6° C (about 60° F) to about 65.6° C (about 150° F) may be in the range of hours to a week with a base solution comprising ammonium hydroxide, an alcoholic alkaline solution, and/or an alkaline amine solution, as compared to a month or longer with a base solution comprising sodium hydroxide used under similar conditions.

According to certain embodiments of the present invention, while not wanting to be limited by any particular theory, it may be believed that the base solutions used in the methods of the present invention may degrade a degradable polymer by way of, *inter alia,* a nucleophilic substitution reaction. Nucleophilic substitution reactions are well known in the art, and are generally thought to follow either a S_{N}1 or a S_{N}2 mechanism. In general, a nucleophilic substitution reaction occurs when a nucleophile becomes attracted to a full or partial positive charge on an electrophile. During the reaction, the nucleophile forms a chemical bond to the electrophile by donating both bonding electrons and displacing another functional group that was previously bonded to the electrophile. Generally, all molecules or ions with a free pair of electrons can act as nucleophiles, however, negative ions (anions) may be more potent than neutral molecules. Preferably, the nucleophiles of the present invention are neutral or negatively charged Lewis bases. In general, the more basic the ion (the higher the pKₐ of the conjugate acid), the more reactive the ion may be as a nucleophile. In certain embodiments, the electrophile may be the carbon of a carbonyl group in a polylactide.

According to certain embodiments of the present invention, while not wanting to be limited by any particular theory, it is believed that the base solutions may degrade the degradable polymer through a base catalyzed hydrolytic or aminolytic pathway. Base solutions that are suitable for use in the methods of the present invention are those that comprise at least one component selected from the group consisting of: ammonium hydroxide, an alcoholic alkaline solution, an alkaline amine solution, and derivatives thereof. Examples of alcoholic alkaline solutions include, but are not limited to, a methanolic sodium hydroxide solution, ethanolic sodium hydroxide solution, methanolic potassium hydroxide solution, and the like. Alcoholic alkaline solutions may provide nucleophiles such as methoxide groups or ethoxide groups. An example of an alkaline amine solution that may be suitable is a combination of an amine (*e*.*g*., ethylenediamine) and sodium hydroxide. In certain embodiments, a base solution which comprises ammonium hydroxide may be introduced to the portion of the subterranean formation by providing a combination of urea, urease enzyme, and water in the portion of the subterranean formation. The urea, urease enzyme, and water react to form ammonium hydroxide *in situ.* Similarly, in some embodiments, an alcoholic alkaline solution may be introduced to a portion of a subterranean formation by providing precursors to the alcoholic alkaline solution and forming the alcoholic alkaline solution *in situ.*

By way of explanation and not of limitation, it is believed that according to some embodiments the base-catalyzed hydrolysis of a degradable polymer may be expressed by the following exemplary pathway:

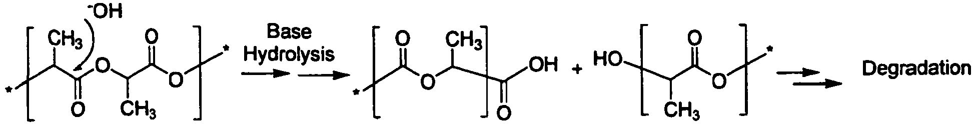

Similarly, it is believed that according to some embodiments the base-catalyzed aminolysis of a degradable polymer in an aqueous environment may be expressed by the following exemplary pathway:

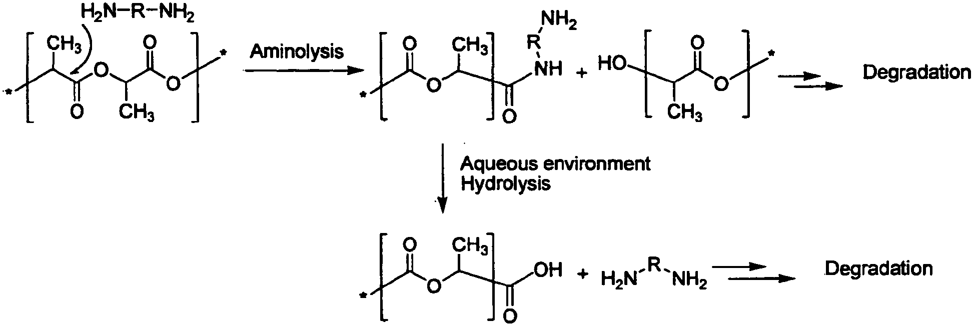

In some embodiments in which a degradable polymer is degraded through a base catalyzed pathway, the base solution provides a nucleophile capable of catalyzing the degradation of a degradable polymer in low temperature subterranean environments, for example, at a bottom hole temperature ("BHT") of about 60°C or less.

The amount of base solution that may be used to degrade a degradable polymer in the present invention will depend on several factors including, but not limited to, the pH of the base solution, the nucleophilicity of nucleophiles present in the solution, the degradable polymer, the temperature of the subterranean formation, the nature of the subterranean formation, and the desired time and/or rate of degradation. In some embodiments, the weight ratio of the base solution to the degradable polymer is equivalent or slightly more than the stoichometric ratio. In some embodiments, the amount of base solution is the amount sufficient to degrade the degradable polymer.

In general, the rate of degradation of the degradable polymers suitable for use in the present invention may be influenced by several factors including temperature, the type of chemical bond in the polymer backbone, hydrophilicity or hydrophobicity of the degradable polymer, the molecular weight of the degradable polymer, crystallinity, and the presence of low molecular compounds in the degradable polymer.

In some embodiments, it is believed that the degradation of the degradable polymer may be caused by the reaction of water with a labile bond of the degradable polymer, such as an ester bond in a polylactide chain. The reaction rate may be closely related to the ability of the degradable polymer to absorb water. Typically, hydrophilic polymers are capable of absorbing a larger quantity of water than a hydrophobic matrix, and therefore, hydrophilic polymers usually degrade more quickly than hydrophobic matrices. In general, a degradable polymer with a greater amorphous content may be attacked more readily by the base solutions of the present invention, and therefore may hydrolyze more readily than crystalline materials. In some embodiments, the rate of degradation, e.g., hydrolysis, may also depend on the kinetics of the degradation reaction.

Degradable polymers suitable for use in the methods of the present invention are those capable of being degraded in the presence of an acid or base solution through a mechanism described herein or any other suitable mechanism. This degradation may be the result of a chemical reaction, a thermal reaction, or a combination thereof, and the degradation may occur over time as opposed to immediately. In some embodiments, degradation of the degradable polymers may be the result of hydrolytic or aminolytic degradation. The terms "degrading," "degradation," and "degradable" refer to both the relatively extreme cases of hydrolytic or aminolytic degradation that the degradable polymer may undergo, *i.e*., heterogeneous (or bulk erosion) and homogeneous (or surface erosion), and any stage of degradation in between these two. The terms "polymer" or "polymers" as used herein do not imply any particular degree of polymerization; for instance, oligomers are encompassed within this definition. In some instances, the degradable polymer may be capable of releasing a desirable degradation product, *e*.*g*., an acid or a base, during its hydrolysis. Among other things, the degradable polymers capable of releasing an acid may degrade after a desired time to release an acid, for example, to degrade a filter cake or to reduce the viscosity of a treatment fluid.

Examples of suitable degradable polymers that may be used in conjunction with the methods of this invention include, but are not limited to, aliphatic polyesters, poly(lactides), poly(glycolides), poly(ε-caprolactones), poly(hydroxy ester ethers), poly(hydroxybutyrates), poly(anhydrides), polycarbonates, poly(amino acids), poly(ethylene oxides), poly(phosphazenes), polyether esters, polyester amides, polyamides, and copolymers, blends, derivatives, or combinations of any of these degradable polymers. The term "derivative" is defined herein to include any compound that is made from one of the listed compounds, for example, by replacing one atom in the listed compound with another atom or group of atoms, rearranging two or more atoms in the listed compound, ionizing one of the listed compounds, or creating a salt of one of the listed compounds. The term "copolymer" as used herein is not limited to the combination of two polymers, but includes any combination of polymers, *e*.*g*., graft polymers, terpolymers and the like. In exemplary embodiments, aliphatic polyesters such as poly(lactic acid), poly(anhydrides), and poly(lactide)-co-poly(glycolide) copolymers may be used.

In preferred embodiments in which the degradable polymer is an aliphatic polyester, the degradable polymer is poly(lactic acid). Other degradable polymers that are subject to hydrolytic or aminolytic degradation may be suitable. The choice of degradable polymers may depend on the particular application and the conditions involved. For example, degradable polymers that may be preferred include those degradable polymers that release useful or desirable degradation products, *e*.*g*., an acid. Such degradation products may be useful in a downhole application, *e*.*g*., to break a viscosified treatment fluid or an acid soluble component present therein (such as in a filter cake). Other guidelines to consider in selecting a degradable polymer include the degradation products that result, the time required for the requisite degree of degradation, and the desired result of the degradation (*e*.*g*., voids).

In embodiments in which the degradable polymer is poly(lactic acid), the poly(lactic acid) may have been synthesized from lactic acid by a condensation reaction or, more commonly, by ring-opening polymerization of cyclic lactide monomer. Since both lactic acid and lactide can achieve the same repeating unit, the general term "poly(lactic acid)" as used herein refers to a polymer made such from lactides, lactic acid, or oligomers, without reference to the degree of polymerization. The lactide monomer exists generally in three different forms: two stereoisomers L- and D-lactide and racemic D,L-lactide (meso-lactide).

The chirality of the lactide units provides a means to adjust, among other things, degradation rates, as well as physical and mechanical properties. Poly(L-lactide), for instance, is a semicrystalline polymer with a relatively slow hydrolysis rate. This could be desirable in applications of the present invention where a slower degradation of the degradable polymers is desired. Poly(D,L-lactide) may be a more amorphous polymer with a resultant faster hydrolysis rate. This may be suitable for other applications where a more rapid degradation may be appropriate. The stereoisomers of lactic acid may be used individually or combined to be used in accordance with the present invention. Additionally, they may be copolymerized with, for example, glycolide or other monomers like ε-caprolactone, 1,5-dioxepan-2-one, trimethylene carbonate, or other suitable monomers to obtain polymers with different properties or degradation times. Additionally, the lactic acid stereoisomers can be modified to be used in the present invention by, among other things, blending, copolymerizing or otherwise mixing the stereoisomers, blending, copolymerizing or otherwise mixing high and low molecular weight poly(lactic acid), or by blending, copolymerizing or otherwise mixing a poly(lactic acid) with another polyester or polyesters.

Degradable polymers comprising an anhydride bond may be the most reactive of the degradable polymers, *e*.*g*., they may have faster degradation rates, even at low temperatures. Suitable acid or base solutions may enhance the rate of a degradation reaction. In preferred embodiments wherein the temperature of the surrounding subterranean formation is very low, (*e*.*g*. temperatures in the range of from about 10°C to about 60°C), the degradable polymer used may be an anhydride, as that degradable polymer is thought to hydrolyze more readily. According to some embodiments in which the degradable polymer comprises a polyanhydride, the degradable polymer may be made to hydrolyze at a higher temperature by increasing the hydrophobicity of the degradable polymer so that water does not reach the hydrolyzable group as readily. In general, the hydrophobicity of a polyanhydride may be increased by increasing the bulk of hydrocarbons in these polymers. Degradable polymers that contain an ester bond (e.g. polylactide, polyglycolide, etc.) may degrade somewhat more slowly and may need a strong base solution for them to degrade at a low temperature. Degradable polymers that comprise a carbonate group may be the hardest to hydrolyze, but strong base solutions may be able to accomplish that task at low temperatures.

Plasticizers may be included in the degradable polymers used in the methods of the present invention. The plasticizers may be present in an amount sufficient to provide characteristics that may be desired, for example, to provide tackiness of the generated degradable polymers. In addition, the plasticizers may enhance the degradation rate of the degradable polymers. The plasticizers, if used, are preferably at least intimately incorporated
within the degradable polymers. An example of a suitable plasticizer for poly(lactic acid) would include oligomeric lactic acid. Examples of plasticizers that may be useful in some embodiments of the present invention include, but are not limited to, polyethylene glycol; polyethylene oxide; oligomeric lactic acid; citrate esters (such as tributyl citrate oligomers, triethyl citrate, acetyltributyl citrate, and acetyltriethyl citrate); glucose monoesters; partially fatty acid esters; PEG monolaurate; triacetin; poly(e-caprolactone); poly(hydroxybutyrate); glycerin-1-benzoate-2,3-dilaurate; glycerin-2-benzoate-1,3-dilaurate; bis(butyl diethylene glycol)adipate; ethylphthalylethyl glycolate; glycerin diacetate monocaprylate; diacetyl monoacyl glycerol; polypropylene glycol (and epoxy derivatives thereof); poly(propylene glycol)dibenzoate; dipropylene glycol dibenzoate; glycerol; ethyl phthalyl ethyl glycolate; poly(ethylene adipate)distearate; di-iso-butyl adipate; and combinations thereof. The choice of an appropriate plasticizer will depend on the particular degradable polymer utilized. It should be noted that, in certain embodiments, when initially formed, the degradable polymer may be somewhat pliable. But once substantially all of the solvent has been removed, the particulates may harden. More pliable degradable polymers may be beneficial in certain chosen applications. The addition of a plasticizer can affect the relative degree of pliability. Also, the relative degree of crystallinity and amorphousness of the degradable polymer can affect the relative hardness of the degradable polymers. In turn, the relative hardness of the degradable polymers may affect the ability of the acid and base solutions to degrade the degradable polymer at low temperatures.

The degradable polymer may be introduced into a subterranean formation for any of a number of uses. Degradable polymers may be used in subterranean operations as fluid loss control particles, diverting agents, filter cake components, drilling fluid additives, cement additives, and the like. In the method of the present invention the degradable polymer is present in a downhole tool (e.g., plugs, sleeves, and the like). The degradable polymer may be present in a filter cake that is present in the subterranean formation. For example, the degradable polymer may be introduced into the formation as part of the fluid that forms the filter cake, such that the filter cake contains the degradable polymer. In some instances, the degradable polymer may be capable of releasing a desirable degradation product, e.g., an acid, during its hydrolysis. The acid released by certain degradable polymers may be used to facilitate a reduction in viscosity of a fluid or to degrade a filter cake, as well as for numerous other functions in subterranean operations. Accordingly, the methods of the present invention may be used in any subterranean operation in which the degradation of a degradable polymer is desired.

In some embodiments, a degradable polymer may be introduced into a subterranean formation by including the degradable polymer in a treatment fluid (*e*.*g*., a fracturing fluid). Such treatment fluids may comprise an aqueous fluid and a degradable polymer. Depending on the application, the treatment fluids further may comprise one or more of the following: a gelling agent, a crosslinking agent, bridging agents, and proppant. The treatment fluids may further comprise additional additives as deemed appropriate by one of ordinary skill in the art, with the benefit of this disclosure. Examples of such additional additives include, but are not limited to, pH-adjusting agents, pH-buffers, oxidizing agents, enzymes, lost circulation materials, scale inhibitors, surfactants, clay stabilizers, fluid loss control additives, combinations thereof, and the like.

A degradable polymer may be included in the treatment fluids in an amount sufficient for a particular application. For example, in embodiments where degradable polymers capable of releasing an acid are used, a degradable polymer should be present in the treatment fluid in an amount sufficient to release a desired amount of acid. In some embodiments, the amount of the released acid should be sufficient to reduce the viscosity of the treatment fluid to a desired level. In another embodiment, the amount of the released acid should be sufficient to facilitate the degradation of an acid-soluble component, for example, an acid-soluble component of a filter cake, an acid-soluble component adjacent to a filter cake, or an acid-soluble component of a proppant pack. In certain embodiments, a degradable polymer may be present in the treatment fluid in an amount in the range of from about 1% to about 30% by weight of the treatment fluid. In certain embodiments, a degradable polymer may be present in the treatment fluid in an amount in the range of from about 3% to about 10% by weight of the treatment fluid. One of ordinary skill in the art, with the benefit of this disclosure, will be able to determine the appropriate amount of a degradable polymer to include in a treatment fluid for a particular application.

The aqueous fluids that may be utilized in the treatment fluids may be fresh water, saltwater (*e*.*g*., water containing one or more salts dissolved therein), brine (*e*.*g*., saturated saltwater), or seawater. In certain embodiments, an aqueous fluid may be present in the treatment fluids used in the methods of the present invention in an amount in the range of from about 1% to about 99% by weight of the treatment fluid. In certain embodiments, an aqueous fluid may be present in the treatment fluids used in the methods of the present invention in an amount in the range of from about 20% to about 80% by weight of the treatment fluid. One of ordinary skill in the art, with the benefit of this disclosure, will recognize the appropriate amount of an aqueous fluid for a chosen application.

Treatment fluids, in addition to introducing degradable polymers into subterranean formations, may also be used to introduce a base solution into a subterranean formation. As used herein, the term "treatment fluid" refers to any fluid that may be used in a subterranean application in conjunction with a desired function and/or for a desired purpose. The term "treatment fluid" does not imply any particular action by the fluid or any component thereof. Accordingly, in some embodiments, a treatment fluid may optionally comprise a base solution. Such treatment fluids may be used to hydrolyze degradable polymers present in the treatment fluid or present in the subterranean formation (*e*.*g*., in a filter cake, in a proppant pack, or in a downhole tool). Where present, the base solution may be present in the treatment fluid in an amount in the range of from about 0.1% to about 50% by weight of the treatment fluid. In some embodiments, the base solution may be present in an amount in the range of from about 1% to about 15% by weight of the treatment fluid.

A wide variety of gelling agents may be employed in the treatment fluids used in the methods of the present invention. While optional, one or more gelling agents may be included in a treatment fluid of the present invention for gelling the water and increasing the treatment fluid's viscosity. Examples of suitable gelling agents include, but are not limited to, biopolymers (*e*.*g*., xanthan and succinoglycan), guar, galactomannan gums, cellulose, modified celluloses, and derivatives thereof, combinations thereof, and the like. When present, a gelling agent generally should be included in the treatment fluids in an amount sufficient, among other things, to achieve a desired viscosity. In some embodiments, a gelling agent may be present in the treatment fluids in amount in the range of from about 0.25% to about 10% by weight of the treatment fluid. In other embodiments, a gelling agent may be present in the treatment fluids in amount in the range of from about 0.75% to about 1.5% by weight of the treatment fluid.

While optional, at least a portion of the gelling agent included in the treatment fluids may be crosslinked by a reaction comprising a crosslinking agent, *e*.*g*., to further increase the treatment fluid's viscosity. Examples of suitable crosslinking agents include, but are not limited to, zirconium compounds (such as, for example, zirconium lactate, zirconium lactate triethanolamine, zirconium carbonate, zirconium acetylacetonate, zirconium malate, zirconium citrate, and zirconium diisopropylamine lactate); titanium compounds (such as, for example, titanium lactate, titanium malate, titanium citrate, titanium ammonium lactate, titanium triethanolamine, and titanium acetylacetonate); aluminum compounds (such as, for example, aluminum lactate or aluminum citrate); borate compounds (such as, for example, sodium tetraborate, boric acid, disodium octaborate tetrahydrate, sodium diborate, ulexite, and colemanite); antimony compounds; chromium compounds; iron compounds; copper compounds; zinc compounds; or a combination thereof. An example of a suitable commercially available zirconium-based crosslinking agent is "CL-24™" crosslinking agent from Halliburton Energy Services, Inc., Duncan, Oklahoma. An example of a suitable commercially available titanium-based crosslinking agent is "CL-39™" crosslinking agent from Halliburton Energy Services, Inc., Duncan Oklahoma. An example of a suitable borate-based crosslinking agent is commercially available as "CL-22™" delayed borate crosslinking agent from Halliburton Energy Services, Inc., Duncan, Oklahoma. Divalent ions also may be used; for example, calcium chloride and magnesium oxide. An example of a suitable divalent ion crosslinking agent is commercially available as "CL-30™" from Halliburton Energy Services, Inc., Duncan, Oklahoma. Where present, a crosslinking agent generally should be included in the treatment fluids of the present invention in an amount sufficient, among other things, to provide the desired degree of crosslinking. In some embodiments, a crosslinking agent may be present in the treatment fluids of the present invention in an amount in the range of from about 0.01% to about 5.0% by weight of the treatment fluid.

In some embodiments of the methods of the present invention, a degradable polymer capable of releasing an acid in a gelled (and optionally crosslinked) treatment fluid may be used in conjunction with a base solution to facilitate a reduction in viscosity of such fluid. In some embodiments the treatment fluid may comprise a base solution to hydrolyze the degradable polymer, thereby releasing an acid. The acid released from the degradable polymer may function, among other things, to reduce the viscosity of the gelled (and optionally crosslinked) treatment fluid, for example, by breaking the crosslinks in the treatment fluid, by reducing the pH of the treatment fluid sufficiently to reverse the crosslinks therein, or by breaking down the backbone of the gelling agent present in the treatment fluid.

According to some embodiments, a treatment fluid comprising a degradable polymer may be introduced to a subterranean formation simultaneously with the introduction of a base solution that does not adversely react with or otherwise interfere with any aspect of the treatment fluid. In other embodiments, a base solution may be introduced to the subterranean formation subsequent to the introduction of the degradable polymer. In some embodiments, a degradable polymer, which may be provided in any of a number of forms, *e*.*g*., in a filter cake, may be contacted by a nucleophile provided by a base solution subsequent to the introduction of the degradable polymer into the subterranean formation.

For example, in certain embodiments, the present invention provides a method of treating at least a portion of a subterranean formation comprising providing a treatment fluid that comprises an aqueous fluid, a degradable polymer capable of releasing an acid, a base solution, and a gelling agent; and introducing the treatment fluid into the subterranean formation. At a chosen time or after a desired delay period, the nucleophile provided by the base solution should be allowed to hydrolyze the degradable polymer so as to release an acid that facilitates a reduction in the treatments fluid's viscosity. The treatment fluid may be recovered from the subterranean formation subsequent to its reduction in viscosity.

In some embodiments, a degradable polymer may be provided in a subterranean formation by a fluid (*e*.*g*., a drill-in and servicing fluid) capable of forming a filter cake on the face of a portion of a subterranean formation. Such fluids are used, among other things, to minimize damage to the permeability of the subterranean formation. Before desirable fluids, such as hydrocarbons, may be produced, the filter cake should be removed.

Accordingly, in certain embodiments of the present invention, a base solution may be introduced into a subterranean formation to facilitate the removal of a filter cake that comprises a degradable polymer. In such embodiments, the filter cake may be formed by a fluid *(e.g.,* a drill-in and servicing fluid) that comprises a degradable polymer. When introduced into the subterranean formation, the base solution hydrolyzes the degradable polymer in such a way as to facilitate its degradation.

To facilitate a better understanding of the present invention, the following examples of certain aspects of some embodiments are given. In no way should the following examples be read to limit, or define, the scope of the invention.

### EXAMPLE 1

Tests of a solution comprising the base ammonium hydroxide were performed on poly(lactic acid) in order to compare the relative times for complete dissolution of poly(lactic acid). Sample No. 1 was a 50 mL solution containing 30% ammonium hydroxide by weight. Sample No. 2 was a 50 mL solution containing 15% ammonium hydroxide by weight. Sample No. 3 was a 50 mL solution containing 7.5% ammonium hydroxide by weight. Poly(lactic acid) beads (2 mm diameter, 5050D beads commercially available from Cargill-Dow, Minneapolis, Minnesota) were added to each Sample and gently stirred at room temperature (22°C). The polylactic acid beads hydrolyzed and formed a homogenous solution. The results of this test are shown in Table 1.

**TABLE 1**

| **Time** | **Sample No. 1** | **Sample No. 2** | **Sample No. 3** |
|---|---|---|---|
| 48 hours | Completely hydrolyzed | - | - |
| 120 hours | - | Completely hydrolyzed | - |
| 14 days | - | - | Completely hydrolyzed |

Therefore, this example shows that a solution comprising a base such as ammonium hydroxide is capable of hydrolyzing a degradable polymer at low temperatures.

### EXAMPLE 2

The dissolution of poly(lactic acid) was tested with a solution comprising the basic methanolic NaOH as follows. First, 5 g of poly(lactic acid) beads (2 mm diameter, 5050D beads commercially available from Cargill-Dow, Minneapolis, Minnesota) were added to a 50 mL solution containing 5% NaOH by weight. This solution was stirred at room temperature (22°C) for five days. At the end of the five days, no appreciable dissolution of the poly(lactic acid) was observed. Next, 10 mL of methanol were added to the solution, and the solution was heated to 50°C for three days. At the end of the three days, the poly(lactic acid) was completely hydrolyzed.

Therefore, this example shows that a solution comprising a base such as methanolic NaOH is capable of hydrolyzing a degradable polymer at low temperatures.

### EXAMPLE 3

The dissolution of poly(lactic acid) was tested with a solution comprising alkaline ethylenediamine as follows. Two test samples, Sample No. 4 and Sample No. 5, were prepared as follows: 5 g of poly(lactic acid) beads (2 mm diameter, 5050D beads commercially available from Cargill-Dow, Minneapolis, Minnesota), 3 g of NaOH, and 5 mL of ethylenediamine were added to a 50 mL solution of water. Sample No. 4 was gently stirred at room temperature (22°C) and observed for complete dissolution of the poly(lactic acid), while Sample No. 5 was gently stirred at 55°C and observed. In Sample No. 4, the poly(lactic acid) was completely dissolved after 15 days. In Sample No. 5, the poly(lactic acid) was completely dissolved after 6 days.

This example thus shows that a solution comprising alkaline ethylenediamine is capable of degrading a degradable polymer at low temperatures.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered or modified and all such variations are considered within the scope of the present invention. In particular, every range of values (of the form, "from about a to about b," or, equivalently, "from approximately a to b," or, equivalently, "from approximately a-b") disclosed herein is to be understood as referring to the power set (the set of all subsets) of the respective range of values, and set forth every range encompassed within the broader range of values. Also, the terms in the claims have their plain, ordinary meaning unless otherwise explicitly and clearly defmed by the patentee. Moreover, the indefinite articles "a" or "an", as used in the claims, are defined herein to mean one or more than one of the element that it introduces.

## Claims

1. A method comprising:
providing a degradable polymer within a portion of a subterranean formation wherein the degradable polymer is present in a downhole tool and wherein the degradable polymer comprises at least one degradable polymer selected from the group consisting of: an aliphatic polyester, a poly(lactide), a poly(glycolide), a poly(ε-caprolactone), a poly(hydroxy ester ether), a poly(hydroxybutyrate), a poly(anhydride), a polycarbonate, a poly(ortho ether), a poly(amino acid), a poly(ethylene oxide), a poly(phosphazene), a polyether ester, a polyester amide, a polyamide, and a copolymer of the foregoing; introducing a base solution into the portion of the subterranean formation, wherein the base solution comprises at least one base selected from the group consisting of: ammonium hydroxide, an alcoholic alkaline solution, an alkaline amine solution, and derivatives thereof; and allowing the base solution to degrade the degradable polymer.

2. A method according to claim 1, wherein the subterranean formation has a temperature of lower than 60°C.

3. A method according to any preceding claim, wherein the degradable polymer releases an acid upon hydrolysis.

4. A method according to any preceding claim, wherein a plasticizer is included in the degradable polymer.

5. A method according to claim 4, wherein the plasticizer comprises at least one plasticizer selected from the group consisting of: a polyethylene glycol; a polyethylene oxide; an oligomeric lactic acid; a citrate ester; a glucose monoester; a partially fatty acid ester; a PEG monolaurate; a triacetin; a poly(e-caprolactone); a poly(hydroxybutyrate); a glycerin-1-benzoate-2,3-dilaurate; a glycerin-2-benzoate-1,3-dilaurate; a bis(butyl diethylene glycol)adipate; an ethylphthalylethyl glycolate; a glycerin diacetate monocaprylate; a diacetyl monoacyl glycerol; a polypropylene glycol; an epoxy derivative of a polypropylene glycol; a poly(propylene glycol)dibenzoate; a dipropylene glycol dibenzoate; a glycerol; an ethyl phthalyl ethyl glycolate; a poly(ethylene adipate)distearate; and a di-iso-butyl adipate.

## Patentansprüche

1. Verfahren, das Folgendes umfasst:
Bereitstellen eines abbaubaren Polymers in einem Abschnitt einer unterirdischen Formation, wobei das abbaubare Polymer in einem Bohrlochwerkzeug vorliegt und wobei das abbaubare Polymer mindestens ein abbaubares Polymer umfasst, das aus der Gruppe bestehend aus folgenden ausgewählt ist: einem aliphatischen Polyester, einem Poly(lactid), einem Poly(glycolid), einem Poly(ε-caprolacton), einem Poly(hydroxyesterether), einem Poly(hydroxybutyrat), einem Poly(anhydrid), einem Polycarbonat, einem Poly(ortho-ether), einer Poly(aminosäure), einem Poly(ethylenoxid), einem Poly(phosphazen), einem Polyetherester, einem Polyesteramid, einem Polyamid und einem Copolymer der vorstehenden; Einbringen einer Basenlösung in den Abschnitt der unterirdischen Formation, wobei die Basenlösung mindestens eine Base umfasst, die aus der Gruppe bestehend aus folgenden ausgewählt ist: Ammoniumhydroxid, einer alkoholischen alkalischen Lösung, einer alkalischen Aminlösung und Derivaten davon; und Abbauenlassen des abbaubaren Polymers durch die Basenlösung.

2. Verfahren nach Anspruch 1, wobei die unterirdische Formation eine Temperatur von weniger als 60 °C hat.

3. Verfahren nach einem vorhergehenden Anspruch, wobei das abbaubare Polymer bei Hydrolyse eine Säure freisetzt.

4. Verfahren nach einem vorhergehenden Anspruch, wobei ein Plastifizierungsmittel in dem abbaubaren Polymer enthalten ist.

5. Verfahren nach Anspruch 4, wobei das Plastifizierungsmittel mindestens ein Plastifizierungsmittel umfasst, das aus der Gruppe bestehend aus folgenden ausgewählt ist: einem Polyethylenglycol; einem Polyethylenoxid; einer oligomeren Milchsäure; einem Citratester; einem Glucosemonoester; einem partiellen Fettsäureester; einem PEG-Monolaurat; einem Triacetin; einem Poly(ε-caprolacton); einem Poly(hydroxybutyrat); einem Glycerin-1-benzoat-2,3-dilaurat; einem Glycerin-2-benzoat-1,3-dilaurat; einem Bis(butyldiethylenglycol)adipat; einem Ethylphthalylethylglycolat; einem Glycerindiacetatmonocaprylat; einem Diacetylmonoacylglycerol; einem Polypropylenglycol; einem Epoxyderivat eines Polypropylenglycols; einem Poly(propylenglycol)dibenzoat; einem Dipropylenglycoldibenzoat; einem Glycerol; einem Ethylphthalylethylglycolat; einem Poly(ethylenadipat)distearat und einem Diisobutyladipat.

## Revendications

1. Procédé comprenant les étapes consistant à :
alimenter un polymère dégradable dans une partie d'une formation souterraine, le polymère dégradable étant présent dans un outil de fond de puits et ledit polymère dégradable comprenant au moins un polymère dégradable choisi dans le groupe constitué par un polyester aliphatique, un polylactide, un polyglycolide, une poly-ε-caprolactone, un polyhydroxyester-éther, un polyhydroxybutyrate, un polyanhydride, un polycarbonate, un polyorthoéther, un polyaminoacide, un polyoxyde d'éthylène, un polyphosphazène, un polyéther-ester, un polyestéramide, un polyamide et un copolymère des précédents ; introduire une solution basique dans la partie de la formation souterraine, la solution basique comprenant au moins une base choisie dans le groupe constitué par l'hydroxyde d'ammonium, une solution alcaline alcoolique, une solution d'amine alcaline, et des dérivés de ceux-ci ; et laisser la solution basique dégrader le polymère dégradable.

2. Procédé selon la revendication 1, dans lequel la formation souterraine possède une température inférieure à 60°C.

3. Procédé selon l'une quelconque des revendications précédentes, dans lequel le polymère dégradable libère un acide lors de son hydrolyse.

4. Procédé selon l'une quelconque des revendications précédentes, dans lequel un plastifiant est incorporé dans le polymère dégradable.

5. Procédé selon la revendication 4, dans lequel le plastifiant comprend au moins un plastifiant choisi dans le groupe constitué par un polyéthylène glycol ; un polyoxyde d'éthylène ; un acide lactique oligomère ; un ester citrate ; un monoester de glucose ; un ester d'acide gras partiel ; un monolaurate de PEG ; une triacétine ; un poly-ε-caprolactone ; un polyhydroxybutyrate ; un 1-benzoate-2,3-dilaurate de glycérol ; un 2-benzoate-1,3-dilaurate de glycérol ; un adipate de bis-butyldiéthylène glycol ; un glycolate d'éthylphtalyléthyle ; un diacétate monocaprylate de glycérol ; un diacétylmonoacylglycérol ; un polypropylène glycol ; un dérivé époxyde d'un polypropylène glycol ; un dibenzoate de polypropylène glycol ; un dibenzoate de dipropylène glycol ; un glycérol ; un glycolate d'éthylphtalyléthyle ; un distéarate de polyadipate d'éthylène ; et un diadipate d'isobutyle.
